# EUROPEAN PATENT SPECIFICATION

(11) **EP 1 131 954 B1**
(45) Date of publication and mention of the grant of the patent: **03.09.2003**
(21) Application number: 99954213.7
(22) Date of filing: 11.11.1999
(51) Int. Cl.: H04N 7/173

(54) **User-customized video-on-demand service with preview capability**
Benutzerangepasster Video-auf-Anfrage-Dienst mit Vorschaumöglichkeit
Service de vidéo-à-la-demande personnalisé avec une fonction to prévisualisation

(30) Priority: 11.11.1998 GB 9824783
(43) Date of publication of application: 12.09.2001
(73) Proprietor: ISIS INNOVATION LIMITED, Summertown, Oxford OX2 7BZ (GB)
(72) Inventor: SHOTTON, David, Michael, Oxford OX2 8JN (GB); BOUDIER, Thomas, F-75020 Paris (FR)
(74) Representative: Smith, Samuel Leonard
(86) International application number: GB9903751
(87) International publication number: WO00028741

(56) References cited:
- EP-A- 0 803 826
- WO-A-98/41021
- DE JONG A., HSING K., SU D.: "A VOD Application Implemented in Java" MULTIMEDIA TOOLS AND APPLICATIONS, vol. 5, no. 2, September 1997 (1997-09), pages 161-170, XP002129581

## Description

The present invention relates to a method and device for retrieving customized moving image data (i.e. videos, movies, animations, etc., hereinafter referred to as video data) from a remote source and a moving image data source for remote retrieval. The video data may comprise relatively short video clips, animations or entire video films (movies), for instance in the case of video-on-demand.

It is known how to provide digital video data over a network for access by remote users. However, previous systems have a number of drawbacks. In particular, video data files are typically very large and, hence, take a considerable amount of time to download over a network such as the Internet. Their large size may also make them inconvenient for use with the small processor memories or limited data storage capacities of many user terminals. Furthermore, video data files are often provided on network servers in a format which may be inappropriate for many user terminals or for the intended end use.

WO 98/41021 describes an improved live video imaging system and method for providing increased viewer control over the operating parameters of the imaging system. Viewer control is facilitated by including a back channel within the live imaging system, whereby a viewer may adjust spatial and temporal resolution, quantization and other operating parameters of the video camera transmission.

EP-A- 0 803 826 describes a computer process which requests streams of motion video and decodes the motion video signals of the stream for display in a computer display device. It is constructed in the form of an applet for a multimedia document viewer such as a World Wide Web browser. Accordingly, a designer of multimedia documents such as HTML pages can easily incorporate motion video display into such HTML pages by specifying a few parameters defining a desired video or a desired portion of such a video to be requested from a video streaming server. The applet builds bit stream control signals from the specification of the video or the requested portion of the video. The bit stream control signals request transmission of the video or the requested portion thereof from a bit stream server such as a video server and are in a form appropriate for processing by the bit stream server.

According to the present invention, there is provided a method of requesting and retrieving from a remote source customized video data derived from video data contained within a video data file located at the remote source, the method comprising:
(a) specifying a particular video data file and requesting from the remote source a preview image of video data contained within said particular video data file and information concerning said video data;
(b) receiving from the remote source said preview image of said video data and said information concerning said video data;
(c) specifying parameters determining at least one of the desired spatial, temporal and format characteristics for customizing said video data contained within said particular video data file and sending the parameters to the remote source; and
(d) receiving from the remote source customized video data derived from said video data contained within said particular video data file and transmitted by the remote source after customization on the basis of the specified parameters.

According to the present invention, there is also provided a device for requesting and retrieving from a remote source customized video data derived from video data contained within a video data file located at the remote source, the device including:
(a) means for specifying a particular video data file and requesting from the remote source a preview image of video data contained within said particular video data file and information concerning said video data;
(b) means for receiving from the remote source said preview image of said video data and said information concerning said video data;
(c) means for specifying and transmitting parameters determining at least one of the desired spatial, temporal and format . characteristics for customizing said video data and for requesting customization by said remote source of said video data on the basis of the specified customization parameters; and
(d) means for receiving customised video data derived from said video data contained within said particular video data file and supplied from the remote source after customization of said video data on the basis of the specified customization parameters.

According to the present invention, there is also provided a video data source for remote access, capable of providing customized video data derived from video data contained within a video data file located at said video data source, said video data source including:
(a) means responsive to selection by a remote user of a particular video data file to prepare a preview image of video data contained within said particular video data file and information concerning said video data,
(b) means for transmitting to the remote user the preview image of said video data and the information concerning said video data,
(c) means responsive to parameters received from the remote user for determining at least one of the desired spatial, temporal and format characteristics for customisation of said video data, and
(d) means for transmitting to the remote user customised video data derived from video data contained within said particular video data file after customization by the video data source on the basis of the received parameters.

Once a user terminal has accessed the source, the source can transmit to the user a control program to enable the user to specify the customization parameters. The control program may take the form of a Java applet. In this way, the user terminal does not in itself require any features dedicated to the remote source, but acquires the ability to control the source upon accessing it. The source can be used by several remote users concurrently.

The specifying parameters may specify merely default or unmodified video data or may specify customization of the video data. Furthermore, the specifying parameters may additionally determine one or both of auditory and visual characteristics.

The customized video data may include one or more of the following characteristics:
(i) one or more temporal extracts from the original video data or the full original length,
(ii) one or more spatial extracts from the original video data or the full original frame size,
(iii) a magnification or demagnification (zooming or dezooming) of the original video data or the unmodified original dimensions,
(iv) a time lapse ratio relative to the original video data where this value may be unity,
(v) a selection of one or more of the soundtracks from among those accompanying the original video data or the omission of soundtrack data,
(vi) a modification of the visual appearance of the original video data by the application of selected image processing procedures or no change to the visual appearance,
(vii) encoding of the video data using a selected video format that may be the same as that of the original video data,
(viii) encoding of the video data using a specified frame rate that may be the same as that of the original video data,
(ix) encoding of the video data using a selected compression/decompression algorithm (codec) that may be the same as that of the original video data, and
(x) encoding of the video data using a selected compression quality setting that may be the same as that of the original video data.

The present invention permits the user to customize a personal version of a particular video data file available on a network server or on an Internet server prior to downloading it, hence permitting the video to be adapted to suit the bandwidth of its network connection, the available data storage capacity, the video playback software available on the user's computer, or the subsequent usage to which the video will be put.

Specifically, the present invention makes it possible to edit a selected video data file spatially and temporally, to modify the magnification and the time lapse ratio of the customized version, to select the soundtracks, to modify the visual appearance of the original video data, and to change the video format, the frame rate, and the nature and quality of the compression applied to the customized video data, prior to downloading to the user. In this way, the video quality and playback characteristics can be matched to the intended use to which the video will be put, and substantial savings in download time and data storage requirement may be obtained.

This may be advantageous for the user.

For example, in some cases a user may require only part of the full video temporal sequence, perhaps only the first half, or may require only part of each video frame, for instance only the bottom right quadrant. By specifying such customization parameters to the source, which modifies the video data in response to them before transmission to the user, unnecessary data is not transmitted over the network. In consequence, both the transfer (downloading) time and the video data file size may be reduced, the latter thus requiring less data storage space on the user terminal. This is particularly useful if the user terminal has a small processor memory and/or limited data storage capacity.

Rather than downloading an entire video data file and then edit and process it locally, a user merely requests the customization of the video data required, leaving the computational burden for the video editing and customization processes to the source, such that a relatively unsophisticated remote user terminal with limited processing power can obtain a video data file edited as required, without the need for any local video editing capabilities.

Thus, using the present invention, a user can download only that part of a video which is of interest, either in temporal or spatial terms. Similarly, the user can download the video data with the image quality or format to suit the user terminal or application.

If, for example, the viewer wishes to download and view an entire video for which a version in streaming format is not available, but has only a low-speed network connection and limited data storage capacity, a highly compressed and spatially demagnified (dezoomed) version might be chosen to enable rapid Internet transmission and uninterrupted viewing at full frame rate.

Alternatively, if the video is to be downloaded for subsequent local projection, the projectionist will wish to ensure that it is downloaded in full length and at full frame size, with the highest possible quality compatible with the real-time video display bandwidth of the local video server, even if this means a prolonged downloading processes that may be conveniently performed overnight.

If the purpose is instead to undertake frame-by-frame image analysis of a few particular events, in order to quantify particular features in the images, then it may be desirable to download only particular areas of interest within selected temporal video clips from the original video data file, but to do so at the highest possible resolution.

The present invention will be more clearly understood from the following description, given by way of example only, with reference to the accompanying drawings, in which:
Figure 1 illustrates schematically an embodiment of the present invention on a network;
Figure 2 illustrates schematically an alternative embodiment of the invention on a network;
Figure 3 illustrates the control panel of a user terminal operating according to an embodiment of the present invention; and
Figure 4 illustrates another control panel of a user terminal operating according to an embodiment of the present invention.

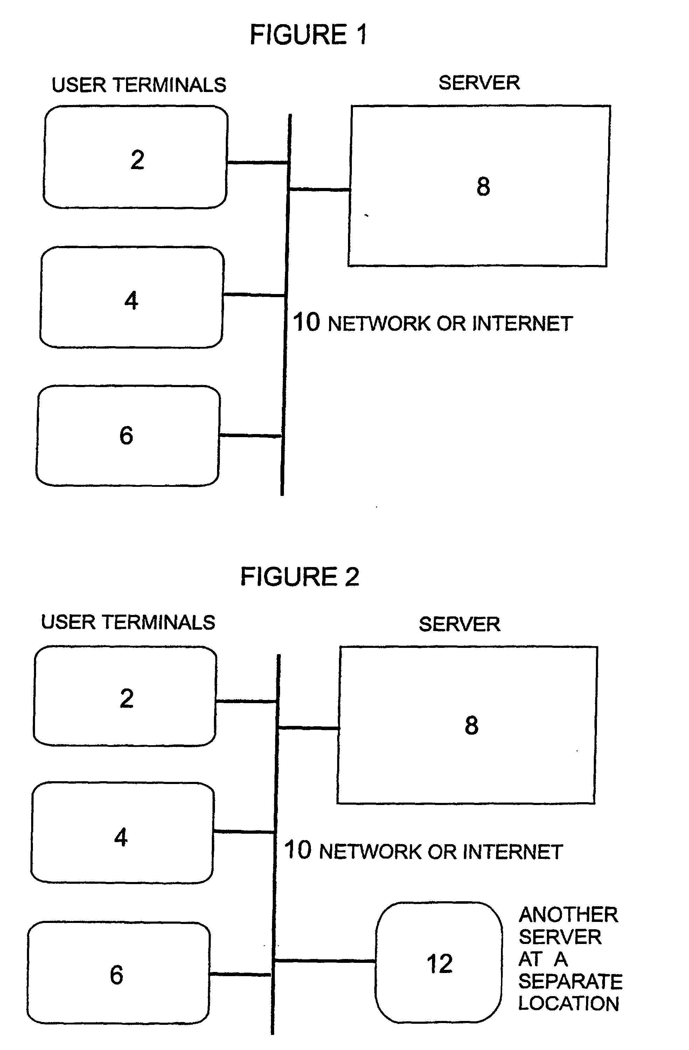

As is well known and as is illustrated in Figures 1 and 2, a number of user terminals 2,4,6 may communicate with a server 8 over a network 10. In particular, it is possible to provide the user terminals 2,4,6 and the server 8 with connections to the Internet 10, such that they may communicate over the Internet 10.

The server 8 may provide many different services to the user terminals 2,4,6. One very common use of a server 8 is to provide information. The information provided may include many different types of data, including text, sounds and images. The present application is particularly concerned with the provision of digitized moving image data (i.e. videos, movies, animations, etc., herein referred to as video data). The server 8 may store the video data itself or may handle video data stored on another server at a separate location 12 (Figure 2). In the latter case, the video data may be transferred to the server 8 from another server at a separate location 12 by a dedicated line or, as illustrated in Figure 2, via a network or the Internet 10.

It is now proposed to provide a system based on the server 8 and the user terminals 2,4,6 which enables editing and customization of specified video data files to be undertaken on the server 8 by remote users, and for the resulting customized video data file to be downloaded from the server 8 to the user terminals 2,4, 6. In particular, the system is intended to allow only desired spatio-temporal portions of particular video files to be downloaded, and to allow the edited video data to be downloaded with a specified magnification, time lapse ratio and visual appearance, with selected soundtracks, and with a specified video format, frame rate, codec and compression quality setting.

The preferred embodiment to be described below is called *VIDOS,* since the present invention in a *VIdeo Download Specification* system. The preferred embodiment described as *VIDOS* may be written as a platform-independent Java server program running on a *VIDOS* server, together with Java applets running on the user terminals by which the users can select the required video data files and specify the parameters to be used in preparing the customized versions of these files. Although other methods of implementing the invention are possible, Java is a form of programming that is particularly well suited for interactive work over a network or the Internet. The server 8 preferably stores the Java server program and Java user applets relating to the video selection and customization. When one of the user terminals 2,4,6 accesses the *VIDOS* server 8, the appropriate Java applet is sent to the particular user terminal 2,4,6 and this enables the user terminal 2,4,6 to send appropriate parameters to the server 8, first to specify the selected video data file and subsequently to customize the video data prior to downloading. More specifically, it permits the user to enter the parameters required to customize a personal edited version of a particular video data file, to be informed of the consequences of these parameter choices in terms of the compression time and final video file size, and to see a preview of the first 50 frames of the customized version prior to final downloading of the complete customized video. On-line help may be available to guide the naïve user in making these choices. All the parameters have initial default values, and, in case of incompatibilities in the choices made, the program may inform the user and offer appropriate alternatives.

The video customization parameters may be passed over a network or the Internet, for example using standard World Wide Web protocols, to the main *VIDOS* server program running on the distant server. The server may operate using the Java program together with standard programming tools and libraries to produce the desired customized version of the video. It may then send a message to the user terminal, providing the user with access to the customized video data and permitting the user to initiate the customized video downloading process.

The nature of the Java *VIDOS* server program is such that several user terminals 2,4,6 may undertake concurrent customizations of different video data files.

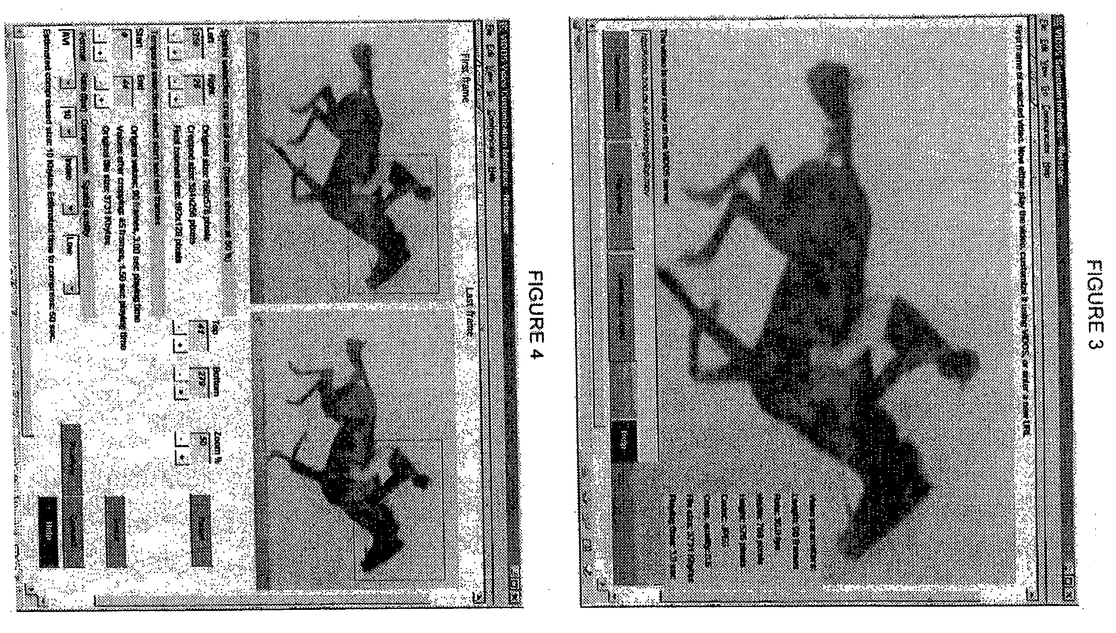

The working of the present invention will now be described in greater detail. Upon first accessing the server 8, each user terminal 2,4,6 preferably presents to the user a control panel (the video selection interface), such as is illustrated in Figure 3. The user is first asked to specify the name and location of the video data file to be edited, which may be stored on the *VIDOS* server 8 itself or on another server at a separate location 12. Once this file has been located and, if necessary, transferred to the *VIDOS* server 8, an image of the video data is prepared by the server and transmitted to the user terminal. This may take the form of a still image of the first frame of the chosen video data file, as in the example illustrated in Figure 3, or it may comprise downloaded or streamed moving image data of reduced preview resolution, with appropriate viewing controls. The server preferably also transmits to the user terminal textual data relating to the size and format of the full video data file as stored by the server 8 or obtained from another server at a separate location 12. The user may at this stage choose simply to download the entire video file in its original format, or alternatively may choose to make use of the *VIDOS* system to create a customized version of the original video data prior to downloading it.

Having selected use of the *VIDOS* video download specification system, the user terminal presents the user with a second control panel (the video customization interface), such as is illustrated in Figure 4. Once again, an image representative of the video data is displayed in the upper portion of the control panel, and controls are provided whereby the user is able to enter customization parameters.

In entering the customization parameters, the user can first determine the spatial extent of each video frame to be downloaded. By default, this is the full frame, but, as shown in the example (Figure 4), the user can interactively limit the spatial region of each frame to a particular rectangular area of interest (AoI). The dimensions of this may be defined in a number of ways: for example by using mouse clicks on the displayed image of the video data to identify the upper left and lower right corners of the AoI box; by typing the cropping values in the four text boxes (left, right, top and bottom) immediately below the video image; or by increasing or decreasing the values in these boxes using the adjacent + and - spinner buttons. In whichever way the user chooses to specify the AoI, the selected area is preferably displayed by an outline on the illustrated image of the video data (Fig. 4). It would alternatively be possible to select more than one area of interest, and to position several areas of interest in different ways in the final video frames.

A magnification/ demagnification (zoom/dezoom) parameter may also be specified. In the illustrated control panel (Figure 4), this is the right-hand box on the top row. Taking account of this zoom factor, the cropped original frame size and the resulting download frame size are interactively displayed in the adjacent area. In addition, the file size of the output video after such spatial editing and an estimate of the conversion time required to generate the customized video may be indicated (as is illustrated near the bottom of Figure 4). These values may also be interactively updated as the AoI cropping parameters and the other download customization parameters described below are modified.

As illustrated in Figure 4, in addition to the controls specifying the spatial constraints to be imposed on the original video data prior to downloading, it is also possible to provide similar controls by which the user can undertake temporal editing of the original video data. The default values include the whole of the original video. The system preferably enables the user to select one or more temporal sections (video clips) from the original video data, and to arrange such video clips, if more than one, in a specified sequence in the final customized video. In the example shown in Figure 4, by using controls to enter the first and last frame numbers, the user is able to specify the time points in the original video that will become the beginning and end of the customized video. The system preferably enables the user to view the frames to be chosen for the start and end times of each video clip, for example by positioning sliders on a video time-line display control.

The system preferably enables the user to specify a time lapse ratio between the original and the customized video data, which if other than unity enabling the user to view events either in slow motion or speeded up relative to the original.

If the original video has a sound track, a control is preferably provided to make it possible to specify whether or not this should be included in the customized video. Such selection can be extended to the choice of one or more particular soundtracks from several original soundtracks, for example multiple language soundtracks, or the omission of the soundtrack data altogether.

One can also preferably alter the visual appearance of the original video data by applying simple image processing procedures such as contrast enhancement, smoothing or sharpening, pseudocolouring, etc.

Once the spatial, temporal, auditory and visual parameters have been specified, the user may then use further controls to specify other customizing parameters. As illustrated, drop-down list boxes are provided to specify the customizing parameters that relate to the desired video encoding. The first of these preferably specifies the video format to be used, with a choice between several commonly-used industry standard digital video formats such as AVI (Audio Video Interleave), QT (Quick Time) or MPEG-1. The second is for the video frame rate, for example either 10, 15, 20, 25 or 30 frames per second. Then comes the choice of the codec to be applied to the video, for example Cinepak, Indeo, Motion-JPEG, MPEG-1 or other industry standard codecs, with these choices preferably being automatically adapted to the initial choice of video format, as appropriate. The user can then specify the compression quality setting, for example choosing between 'Uncompressed' (not available for certain formats such as MPEG-1), 'Low', 'Medium' or 'High' (which may correspond to bit rates of 579,000, 1,158,000 and 2,316,000 bits per second for MPEG-1, or to values of 0.3, 0.6 and 0.9 for the spatial quality setting of other codecs).

As mentioned above, all of these parameters preferably have initial default values. If incompatible choices are made, the system preferably informs the user and offer appropriate alternatives. Every time a parameter choice is made, the displayed estimates of the final video data file size and conversion time can be automatically updated. These estimates may be determined from a data table derived from prior test video data conversions undertaken on the particular hardware upon which the *VIDOS* server program is running, under the full range of possible compression conditions, the actual conversion times obviously depending on the performance of the server on which the system is running and the number of concurrent users.

In the light of the feedback provided by the *VIDOS* server, the user may revise the input customization parameters. The system preferably provides a Preview control for use once the user believes that the customization parameters have been optimized for the required purpose. As illustrated in Figure 4, such a Preview button is provided at the foot of the *VIDOS* video customization interface screen. This preferably activates the customization of the first section of the video, for example the first fifty frames, which is then downloaded and displayed on the user terminal. In this way, the user is given the opportunity to make a final quality assurance check, to ensure that the customized video will have the required appearance and characteristics, before the customization parameters are applied to the entire video data file. At this stage, the customization parameters can be further revised, if desired, until the preview is acceptable.

Finally, the system allows the user to activate the server to undertake the complete customization of the original video data according to the final customization parameters, and then to download the customized version of it to the user terminal. As illustrated, a Convert button may be provided at the foot of the *VIDOS* video customization interface screen. This may be clicked to activate the *VIDOS* server program to generate a full customized downloadable file with the precise specifications requested, containing just the required portions of the original video data in the desired format. The user may already know the time that this conversion is likely to take, having been advised of this at the foot of the *VIDOS* video customization interface screen. Depending upon the length of the original video, the nature of the customization requested, the computing power of the server, and the number of concurrent users, the conversion process take from a few seconds to several minutes. When this task is complete, the *VIDOS* server preferably sends a message to the user terminal confirming that the customization process has been completed, giving the compressed size of the customized version of the video, and providing a link to the customized video file itself, whereby the user may initiate the final downloading process.

In conclusion, once a particular video data file has been identified on a network server or an Internet server, the present invention permits the user to edit and customize the video data from a distance over the network, without having first to download it in its entirety onto the user terminal, by specify the desired spatial, temporal, auditory, visual and format characteristics of the customized video data. One advantage of this is that the network-based video editing may be achieved without the need for the user to possess video editing software on the user terminal. By limiting the spatial or temporal extent of the video data to be downloaded, or by choosing a more efficient data compression system, the size of the customized video data file may be made very significantly smaller than that of the original video data. This capability may be used to improve the speed of network transfer of the video file, which is particularly important when working over low bandwidth network connections such as modems or satellite links. It may also be used to achieve substantial savings in data storage requirements on the user terminal, or to adapt the video data quality and format to suit the playback characteristics of the user terminal or the intended use to which the video will be put.

The present invention has many potential uses. For instance, such network-based video editing would allow regional members of a TV network to download from a central video data repository particular portions of news items and other material relevant to their particular regions. Similarly, video clips may be selected from an archive and tailored for inclusion in live or computer-based professional training programs, for example in the nursing profession or for aircraft maintenance, and school teachers and university lecturers would be able to select video segments, for example of particular twentieth century historical events from a national film archive, to illustrate their own classes and lectures. As the use of networked digital video databases increases, the ability to manipulate video data in this way will become ever more important.

## Claims

1. A method of requesting and retrieving from a remote source (8,12) customized video data derived from video data contained within a video data file located at the remote source (8,12), the method comprising:
(a) specifying a particular video data file and 'requesting from the remote source (8,12) a preview image of video data contained within said particular video data file and information concerning said video data;
(b) receiving from the remote source (8,12) said preview image of said video data and said information concerning said video data;
(c) specifying parameters determining at least one of the desired spatial, temporal and format characteristics for customizing said video data contained within said particular video data file and sending the parameters to the remote source; and
(d) receiving from the remote source (8,12) customized video data derived from said video data contained within said particular video data file and transmitted by the remote source after customization on the basis of the specified parameters.

2. A method according to claim 1, wherein the parameters determine at least two of the desired spatial, temporal and format characteristics.

3. A method according to claim 1 or 2 wherein the parameters determine all of the spatial, temporal and format characteristics.

4. A method according to claim 1, 2 or 3, wherein said customized video data is received over a network (10) or the Internet (10).

5. A method according to any preceding claim wherein the remote source comprises a network server (8,12) or an Internet server (8,12).

6. A method according to any preceding claim for receiving the customised video data using a computer terminal (2,4,6).

7. A method according to any preceding claim further including receiving from the remote source a control program to enable said parameters to be specified for determining the desired spatial, temporal and format characteristics of the customised video data.

8. A method according to claim 7 wherein the control program is written in Java.

9. A method according to any preceding claim further including specifying parameters determining one or both of auditory and visual characteristics of the customized video data.

10. A method according to any preceding claim wherein the step of specifying parameters includes specifying parameters determining one or more of the following video characteristics: the temporal extent of the original video data to be included in the customized video data, the spatial extent of the original video data to be included in the customized video data, the extent to which the original video data should be magnified or demagnified, the time lapse ratio between the original video data and the customized video data, the soundtracks accompanying the customized video data, the visual appearance of the customized video data as determined by the application of selected image processing procedures, and the nature of the encoding of the customized video data, namely the video format, the video frame rate, the compression/decompression algorithm (codec) and the compression quality setting applied to the customized video data.

11. A device (2,4,6) for requesting and retrieving from a remote source customized video data derived from video data contained within a video data file located at the remote source (8,12), the device (2,4,6) including:
(a) means for specifying a particular video data file and requesting from the remote source (8,12) a preview image of video data contained within said particular video data file and information concerning said video data;
(b) means for receiving from the remote source (8,12) said preview image of said video data and said information concerning said video data;
(c) means for specifying and transmitting parameters determining at least one of the desired spatial, temporal and format characteristics for customizing said video data and for requesting customization by said remote source of said video data on the basis of the specified customization parameters; and
(d) means for receiving customised video data derived from said video data contained within said particular video data file and supplied from the remote source (8,12) after customization of said video data on the basis of the specified customization parameters.

12. A device according to claim 11 wherein the parameters determine at least two of the desired spatial, temporal and format characteristics.

13. A device according to claim 11 or 12 wherein the parameters determine all of the spatial, temporal and format characteristics.

14. A device according to claim 11, 12 or 13 wherein said customised video data is received over a network (10) or the Internet (10).

15. A device according to any one of claims 11 to 14 wherein the remote source comprises a network server (8,12) or an Internet server (8,12).

16. A device according to any one of claims 11 to 15 wherein the device is a computer terminal (2,4,6).

17. A device according to any one of claims 11 to 16 further including means for receiving from the remote source a control program to enable the device to specify parameters determining the desired spatial, temporal and format characteristics of the customised video data.

18. A device according to claim 17 wherein the control program is written in Java.

19. A device according to any one of claims 11 to 18 wherein said means for transmitting are for transmitting parameters determining one or both of auditory and visual characteristics of the customized video data.

20. A device according to any one of claims 11 to 19 wherein the means for transmitting are for transmitting parameters determining one or more of the following video characteristics: the temporal extent of the original video data to be included in the customized video data, the spatial extent of the original video data to be included in the customized video data, the extent to which the original video data should be magnified or demagnified, the time lapse ratio between the original video data and the customized video data, the soundtracks accompanying the customized video data, the visual appearance of the customized video data as determined by the application of selected image processing procedures, and the nature of the encoding of the customized video data, namely the video format, the video frame rate, the compression/decompression algorithm (codec) and the compression quality setting applied to the customized video data.

21. A video data source (8,12) for remote access, capable of providing customized video data derived from video data contained within a video data file located at said video data source (8,12), said video data source (8,12) including:
(a) means responsive to selection by a remote user (2,4,6) of a particular video data file to prepare a preview image of video data contained within said particular video data file and information concerning said video data,
(b) means for transmitting to the remote user the preview image of said video data and the information concerning said video data,
(c) means responsive to parameters received from the remote user (2,4,6) for determining at least one of the desired spatial, temporal and format characteristics for customisation of said video data, and
(d) means for transmitting to the remote user (2,4,6) customised video data derived from video data contained within said particular video data file after customization by the video data source (8,12) on the basis of the received parameters.

22. A video data source according to claim 21 wherein the parameters determine at least two of the desired spatial, temporal and format characteristics.

23. A video data source according to claim 21 or 22 wherein the parameters determine all of the spatial, temporal and format characteristics.

24. A video data source according to claim 21, 22 or 23 wherein said customised video data is transmitted over a network (10) or the Internet (10).

25. A video data source according to any one of claims 21 to 24 wherein the video data source comprises a network server (8,12) or an Internet server (8,12).

26. A video data source according to any one of claims 21 to 25 wherein the remote user is a computer terminal (2,4,6).

27. A video data source according to any one of claims 21 to 26 wherein the video data source transmits to the remote user a control program to enable the remote user to specify parameters determining the desired spatial, temporal and format characteristics of the customised video data.

28. A video data source according to claim 27 wherein the control program is written in Java.

29. A video data source according to any one of claims 21 to 28 wherein the video data source is responsive to parameters for determining one or both of auditory and visual characteristics of the customized video data.

30. A video data source according to any one of claims 21 to 29 wherein the video data source is usable by several remote users concurrently.

31. A video data source according to any one of claims 21 to 30 wherein the video data source is responsive to parameters for determining one or more of the following video characteristics: the temporal extent of the original video data to be included in the customized video data, the spatial extent of the original video data to be included in the customized video data, the extent to which the original video data should be magnified or demagnified, the time lapse ratio between the original video data and the customized video data, the soundtracks accompanying the customized video data, the visual appearance of the customized video data as determined by the application of selected image processing procedures, and the nature of the encoding of the customized video data, namely the video format, the video frame rate, the compression/decompression algorithm (codec) and the compression quality setting applied to the customized video data before downloading to the remote user.

## Patentansprüche

1. Verfahren zum Anfordern und Abrufen kundenspezifischer Videodaten von einer entfernten Quelle (8, 12), wobei die kundenspezifischen Videodaten von Videodaten hergeleitet sind, die in einer an der entfernten Quelle (8, 12) befindlichen Videodatendatei enthalten sind, wobei das Verfahren die folgenden Schritte umfaßt:
(a) es wird eine spezielle Videodatendatei spezifiziert, und von der entfernten Quelle (8, 12) werden ein Vorschaubild von in der speziellen Videodatendatei enthaltenen Videodaten und Informationen zu den Videodaten angefordert;
(b) von der entfernten Quelle (8, 12) werden das Vorschaubild der Videodaten und die Informationen zu den Videodaten empfangen;
(c) es werden Parameter spezifiziert, die mindestens eines der gewünschten räumlichen, zeitlichen und formatspezifischen Merkmale bestimmen, um die in der speziellen Videodatendatei enthaltenen Videodaten anzupassen und die Parameter zu der entfernten Quelle zu senden; und
(d) von der entfernten Quelle (8, 12) werden kundenspezifische Videodaten empfangen, die von den in der speziellen Videodatendatei enthaltenen Videodaten hergeleitet und nach Anpassung auf der Basis der vorgegebenen Parameter durch die entfernte Quelle übertragen wurden.

2. Verfahren nach Anspruch 1, bei dem die Parameter mindestens zwei der gewünschten räumlichen, zeitlichen und formatspezifischen Merkmale bestimmen.

3. Verfahren nach Anspruch 1 oder 2, bei dem die Parameter alle räumlichen, zeitlichen und formatspezifischen Merkmale bestimmen.

4. Verfahren nach Anspruch 1, 2 oder 3, bei dem die kundenspezifischen Videodaten über ein Netz (10) oder das Internet (10) empfangen werden.

5. Verfahren nach einem der vorhergehenden Ansprüche, bei dem die entfernte Quelle einen Netz-Server (8, 12) oder einen Internet-Server (8, 12) umfaßt.

6. Verfahren nach einem der vorhergehenden Ansprüche zum Empfangen der kundenspezifischen Videodaten unter Verwendung eines Computer-Endgeräts (2, 4, 6).

7. Verfahren nach einem der vorhergehenden Ansprüche, bei dem ferner von der entfernten Quelle ein Steuerprogramm empfangen wird, damit die Parameter zum Bestimmen der gewünschten räumlichen, zeitlichen und formatspezifischen Merkmale der kundenspezifischen Videodaten spezifiziert werden können.

8. Verfahren nach Anspruch 7, bei dem das Steuerprogramm in Java geschrieben ist.

9. Verfahren nach einem der vorhergehenden Ansprüche, bei dem ferner Parameter spezifiziert werden, die ein akustisches oder optisches Merkmal der kundenspezifischen Videodaten oder beide bestimmen.

10. Verfahren nach einem der vorhergehenden Ansprüche, bei dem der Schritt des Spezifizierens von Parametern das Spezifizieren von Parametern umfaßt, die eines oder mehrere der folgenden Videomerkmale bestimmen: die zeitliche Erstreckung der ursprünglichen Videodaten, die in die kundenspezifischen Videodaten aufzunehmen sind, die räumliche Erstreckung der ursprünglichen Videodaten, die in die kundenspezifischen Videodaten aufzunehmen sind, das Ausmaß, in dem die ursprünglichen Videodaten vergrößert oder verkleinert werden sollen, das Laufzeitverhältnis zwischen den ursprünglichen Videodaten und den kundenspezifischen Videodaten, die die kundenspezifischen Videodaten begleitenden Soundtracks, das durch Anwendung ausgewählter Bildverarbeitungsverfahren bestimmte optische Erscheinungsbild der kundenspezifischen Videodaten und die Art der Codierung der kundenspezifischen Videodaten, nämlich das Videoformat, die Videobildfrequenz, der Kompressions-/Dekompressionsalgorithmus (Codec) und die auf die kundenspezifischen Videodaten angewandte Einstellung der Kompressionsqualität.

11. Vorrichtung (2, 4, 6) zum Anfordern und Abrufen kundenspezifischer Videodaten von einer entfernten Quelle, wobei die kundenspezifischen Videodaten von Videodaten hergeleitet sind, die in einer an der entfernten Quelle (8, 12) befindlichen Videodatendatei enthalten sind, wobei die Vorrichtung (2, 4, 6) folgendes umfaßt:
(a) Mittel zum Spezifizieren einer speziellen Videodatendatei und zum Anfordern eines Vorschaubildes von in der speziellen Videodatendatei enthaltenen Videodaten und Informationen zu den Videodaten von der entfernten Quelle (8, 12);
(b) Mittel zum Empfangen des Vorschaubildes der Videodaten und der Informationen zu den Videodaten von der entfernten Quelle (8, 12);
(c) Mittel zum Spezifizieren und Übertragen von Parametern, die mindestens eines der gewünschten räumlichen, zeitlichen und formatspezifischen Merkmale bestimmen, um die Videodaten anzupassen und die Anpassung der Videodaten durch die entfernte Quelle auf der Basis der spezifizierten Anpassungsparameter zu verlangen; und
(d) Mittel zum Empfangen kundenspezifischer Videodaten, die von in der speziellen Videodatendatei enthaltenen Videodaten hergeleitet und von der entfernten Quelle (8, 12) nach Anpassung der Videodaten auf der Basis der vorgegebenen Anpassungsparameter geliefert wurden.

12. Vorrichtung nach Anspruch 11, bei der die Parameter mindestens zwei der gewünschten räumlichen, zeitlichen und formatspezifischen Merkmale bestimmen.

13. Vorrichtung nach Anspruch 11 oder 12, bei der die Parameter alle räumlichen, zeitlichen und formatspezifischen Merkmale bestimmen.

14. Vorrichtung nach Anspruch 11, 12 oder 13, bei der die kundenspezifischen Videodaten über ein Netz (10) oder das Internet (10) empfangen werden.

15. Vorrichtung nach einem der Ansprüche 11 bis 14, bei der die entfernte Quelle einen Netz-Server (8, 12) oder einen Internet-Server (8, 12) umfaßt.

16. Vorrichtung nach einem der Ansprüche 11 bis 15, bei der die Vorrichtung ein Computer-Endgerät (2, 4, 6) ist.

17. Vorrichtung nach einem der Ansprüche 11 bis 16, die ferner Mittel umfaßt zum Empfangen eines Steuerprogramms von der entfernten Quelle, damit die Vorrichtung Parameter spezifizieren kann, die die gewünschten räumlichen, zeitlichen und formatspezifischen Merkmale der kundenspezifischen Videodaten bestimmen.

18. Vorrichtung nach Anspruch 17, bei der das Steuerprogramm in Java geschrieben ist.

19. Vorrichtung nach einem der Ansprüche 11 bis 18, bei der die Mittel zum Übertragen dazu dienen, Parameter zu übertragen, die ein akustisches oder optisches Merkmal der kundenspezifischen Videodaten oder beide bestimmen.

20. Vorrichtung nach einem der Ansprüche 11 bis 19, bei der die Mittel zum Übertragen dazu dienen, Parameter zu übertragen, die eines oder mehrere der folgenden Videomerkmale bestimmen: die zeitliche Erstreckung der ursprünglichen Videodaten, die in die kundenspezifischen Videodaten aufzunehmen sind, die räumliche Erstreckung der ursprünglichen Videodaten, die in die kundenspezifischen Videodaten aufzunehmen sind, das Ausmaß, in dem die ursprünglichen Videodaten vergrößert oder verkleinert werden sollen, das Laufzeitverhältnis zwischen den ursprünglichen Videodaten und den kundenspezifischen Videodaten, die die kundenspezifischen Videodaten begleitenden Soundtracks, das durch die Anwendung ausgewählter Bildverarbeitungsverfahren bestimmte optische Erscheinungsbild der kundenspezifischen Videodaten und die Art der Codierung der kundenspezifischen Videodaten, nämlich das Videoformat, die Videobildfrequenz, der Kompressions-/Dekompressionsalgorithmus (Codec) und die auf die kundenspezifischen Videodaten angewandte Einstellung der Kompressionsqualität.

21. Videodatenquelle (8, 12) zum Fernzugriff, die in der Lage ist, kundenspezifische Videodaten bereitzustellen, die von Videodaten hergeleitet sind, die in einer an der Videodatenquelle (8, 12) befindlichen Videodatendatei enthalten sind, wobei die Videodatenquelle (8, 12) folgendes umfaßt:
(a) Mittel, die auf die Auswahl einer speziellen Videodatendatei durch einen Fem-Benutzer (2, 4, 6) ansprechen, um ein Vorschaubild von in der speziellen Videodatendatei enthaltenen Videodaten und Informationen zu den Videodaten zu erstellen,
(b) Mittel zum Übertragen des Vorschaubildes der Videodaten und der Informationen zu den Videodaten zu dem Fern-Benutzer,
(c) Mittel, die auf von dem Fem-Benutzer (2, 4, 6) empfangene Parameter ansprechen, um mindestens eines der gewünschten räumlichen, zeitlichen und formatspezifischen Merkmale zur Anpassung der Videodaten zu bestimmen, und
(d) Mittel zum Übertragen kundenspezifischer Videodaten, die von Videodaten hergeleitet sind, die in der speziellen Videodatendatei enthalten sind, zu dem Fern-Benutzer (2, 4, 6) nach Anpassung durch die Videodatenquelle (8, 12) auf der Basis der empfangenen Parameter.

22. Videodatenquelle nach Anspruch 21, bei der die Parameter mindestens zwei der gewünschten räumlichen, zeitlichen und formatspezifischen Merkmale bestimmen.

23. Videodatenquelle nach Anspruch 21 oder 22, bei der die Parameter alle räumlichen, zeitlichen und formatspezifischen Merkmale bestimmen.

24. Videodatenquelle nach Anspruch 21, 22 oder 23, bei der die kundenspezifischen Videodaten über ein Netz (10) oder das Internet (10) übertragen werden.

25. Videodatenquelle nach einem der Ansprüche 21 bis 24, bei der die Videodatenquelle einen Netz-Server (8, 12) oder einen Internet-Server (8, 12) umfaßt.

26. Videodatenquelle nach einem der Ansprüche 21 bis 25, bei der der Fern-Benutzer ein Computer-Endgerät (2, 4, 6) ist.

27. Videodatenquelle nach einem der Ansprüche 21 bis 26, bei der die Videodatenquelle zu dem Fem-Benutzer ein Steuerprogramm überträgt, damit der Fem-Benutzer Parameter spezifizieren kann, die die gewünschten räumlichen, zeitlichen und formatspezifischen Merkmale der kundenspezifischen Videodaten bestimmen.

28. Videodatenquelle nach Anspruch 27, bei der das Steuerprogramm in Java geschrieben ist.

29. Videodatenquelle nach einem der Ansprüche 21 bis 28, bei der die Videodatenquelle auf Parameter zum Bestimmen eines akustischen oder optischen Merkmals der kundenspezifischen Videodaten oder beider anspricht.

30. Videodatenquelle nach einem der Ansprüche 21 bis 29, bei der die Videodatenquelle von mehreren Fern-Benutzern gleichzeitig benutzt werden kann.

31. Videodatenquelle nach einem der Ansprüche 21 bis 30, bei der die Videodatenquelle auf Parameter zum Bestimmen eines oder mehrerer der folgenden Videomerkmale anspricht: die zeitliche Erstreckung der ursprünglichen Videodaten, die in die kundenspezifischen Videodaten aufzunehmen sind, die räumliche Erstreckung der ursprünglichen Videodaten, die in die kundenspezifischen Videodaten aufzunehmen sind, das Ausmaß, in dem die ursprünglichen Videodaten vergrößert oder verkleinert werden sollen, das Laufzeitverhältnis zwischen den ursprünglichen Videodaten und den kundenspezifischen Videodaten, die die kundenspezifischen Videodaten begleitenden Soundtracks, das durch Anwendung ausgewählter Bildverarbeitungsverfahren bestimmte optische Erscheinungsbild der kundenspezifischen Videodaten und die Art der Codierung der kundenspezifischen Videodaten, nämlich das Videoformat, die Videobildfrequenz, der Kompressions-/Dekompressionsalgorithmus (Codec) und die vor dem Herunterladen zu dem Fern-Benutzer auf die kundenspezifischen Videodaten angewandte Einstellung der Kompressionsqualität.

## Revendications

1. Procédé de demande et de récupération à partir d'une source distante (8, 12) de données vidéo personnalisées provenant de données vidéo contenues dans un fichier de données vidéo situé dans la source distante (8, 12), le procédé comportant les étapes consistant à :
(a) spécifier un fichier de données vidéo particulier et demander à partir de la source distante (8, 12) un aperçu des données vidéo contenues dans ledit fichier de données vidéo particulier et des informations concernant lesdites données vidéo,
(b) recevoir à partir de la source distante (8, 12) ledit aperçu desdites données vidéo et lesdites informations concernant lesdites données vidéo,
(c) spécifier des paramètres déterminant au moins l'une des caractéristiques spatiale, temporelle et de format voulues pour personnaliser lesdites données vidéo contenues dans ledit fichier de données vidéo particulier et envoyer les paramètres à la source distante, et
(d) recevoir à partir de la source distante (8, 12) des données vidéo personnalisées provenant desdites données vidéo contenues dans ledit fichier de données vidéo particulier et transmises par la source distante après personnalisation sur la base des paramètres spécifiés.

2. Procédé selon la revendication 1, dans lequel les paramètres déterminent au moins deux des caractéristiques spatiale, temporelle et de format voulues.

3. Procédé selon la revendication 1 ou 2, dans lequel les paramètres déterminent toutes les caractéristiques spatiale, temporelle et de format.

4. Procédé selon la revendication 1, 2 ou 3, dans lequel lesdites données vidéo personnalisées sont reçues sur un réseau (10) ou sur l'Internet (10).

5. Procédé selon l'une quelconque des revendications précédentes, dans lequel la source distante comporte un serveur de réseau (8, 12) ou un serveur Internet (8, 12).

6. Procédé selon l'une quelconque des revendications précédentes destiné à recevoir les données vidéo personnalisées en utilisant un terminal d'ordinateur (2, 4, 6).

7. Procédé selon l'une quelconque des revendications précédentes comportant en outre l'étape consistant à recevoir à partir de la source distante un programme de commande pour permettre auxdits paramètres d'être spécifiés afin de déterminer les caractéristiques spatiale, temporelle et de format voulues des données vidéo personnalisées.

8. Procédé selon la revendication 7, dans lequel le programme de commande est écrit en Java.

9. Procédé selon l'une quelconque des revendications précédentes, comportant en outre l'étape consistant à spécifier des paramètres déterminant la caractéristique auditive et/ou visuelle des données vidéo personnalisées.

10. Procédé selon l'une quelconque des revendications précédentes, dans lequel l'étape consistant à spécifier des paramètres inclut de spécifier des paramètres déterminant une ou plusieurs caractéristiques vidéo suivantes : la mesure temporelle des données vidéo originales à inclure dans les données vidéo personnalisées, la mesure spatiale des données vidéo originales à inclure dans les données vidéo personnalisées, la mesure selon laquelle les données vidéo originales doivent être grossies ou réduites, le rapport chronocinématographique entre les données vidéo originales et les données vidéo personnalisées, les bandes son accompagnant les données vidéo personnalisées, l'aspect visuel des données vidéo personnalisées tel que déterminé par l'application de processus de traitement d'images sélectionnés, et la nature du codage des données vidéo personnalisées, c'est-à-dire le format vidéo, la fréquence image vidéo, l'algorithme de compression/décompression (codec) et le réglage de la qualité de compression appliqué aux données vidéo personnalisées.

11. Dispositif (2, 4, 6) destiné à demander et à récupérer à partir d'une source distante des données vidéo personnalisées provenant de données vidéo contenues dans un fichier de données vidéo situé dans la source distante (8, 12), le dispositif (2, 4, 6) comportant :
(a) des moyens pour spécifier un fichier de données vidéo particulier et demander à partir de la source distante (8, 12) un aperçu des données vidéo contenues dans ledit fichier de données vidéo particulier et des informations concernant lesdites données vidéo,
(b) des moyens pour recevoir à partir de la source distante (8, 12) ledit aperçu desdites données vidéo et lesdites informations concernant lesdites données vidéo,
(c) des moyens pour spécifier et transmettre des paramètres déterminant au moins l'une des caractéristiques spatiale, temporelle et de format voulues pour personnaliser lesdites données vidéo et pour demander une personnalisation par ladite source distante desdites données vidéo sur la base des paramètres de personnalisation spécifiés, et
(d) des moyens pour recevoir des données vidéo personnalisées provenant desdites données vidéo contenues dans ledit fichier de données vidéo particulier et délivrées à partir de la source distante (8, 12) après personnalisation desdites données vidéo sur la base des paramètres de personnalisation spécifiés.

12. Dispositif selon la revendication 11, dans lequel les paramètres déterminent au moins deux des caractéristiques spatiale, temporelle et de format voulues.

13. Dispositif selon la revendication 11 ou 12, dans lequel les paramètres déterminent toutes les caractéristiques spatiale, temporelle et de format.

14. Dispositif selon la revendication 11, 12 ou 13, dans lequel lesdites données vidéo personnalisées sont reçues sur un réseau (10) ou sur l'Internet (10).

15. Dispositif selon l'une quelconque des revendications 11 à 14, dans lequel la source distante comporte un serveur de réseau (8, 12) ou un serveur Internet (8, 12).

16. Dispositif selon l'une quelconque des revendications 11 à 15, dans lequel le dispositif est un terminal d'ordinateur (2, 4, 6).

17. Dispositif selon l'une quelconque des revendications 11 à 16, comportant en outre des moyens pour recevoir à partir de la source distante un programme de commande pour permettre au dispositif de spécifier des paramètres déterminant les caractéristiques spatiale, temporelle et de format voulues des données vidéo personnalisées.

18. Dispositif selon la revendication 17, dans lequel le programme de commande est écrit en Java.

19. Dispositif selon l'une quelconque des revendications 11 à 18, dans lequel lesdits moyens de transmission sont destinés à transmettre des paramètres déterminant la caractéristique auditive et/ou visuelle des données vidéo personnalisées.

20. Dispositif selon l'une quelconque des revendications 11 à 19, dans lequel les moyens de transmission sont destinés à transmettre des paramètres déterminant une ou plusieurs caractéristiques vidéo suivantes : la mesure temporelle des données vidéo originales à inclure dans les données vidéo personnalisées, la mesure spatiale des données vidéo originales à inclure dans les données vidéo personnalisées, la mesure selon laquelle les données originales doivent être grossies ou réduites, le rapport chronocinématographique entre les données vidéo originales et les données vidéo personnalisées, les bandes son accompagnant les données vidéo personnalisées, l'aspect visuel des données vidéo personnalisées tel que déterminé par l'application de processus de traitement d'images sélectionnés, et la nature du codage des données vidéo personnalisées, c'est-à-dire le format vidéo, la fréquence image vidéo, l'algorithme de compression/décompression (codec) et le réglage de la qualité de compression appliqué aux données vidéo personnalisées.

21. Source de données vidéo (8, 12) pour un accès à distance, capable de délivrer des données vidéo personnalisées provenant de données vidéo contenues dans un fichier de données vidéo situé dans ladite source de données vidéo (8, 12), ladite source de données vidéo (8, 12) comportant :
(a) des moyens sensibles à une sélection par un utilisateur à distance (2, 4, 6) d'un fichier de données vidéo particulier afin de préparer un aperçu de données vidéo contenues dans ledit fichier de données vidéo particulier et des informations concernant lesdites données vidéo,
(b) des moyens pour transmettre à l'utilisateur à distance l'aperçu desdites données vidéo et les informations concernant lesdites données vidéo,
(c) des moyens sensibles aux paramètres reçus en provenance de l'utilisateur à distance (2, 4, 6) pour déterminer au moins l'une des caractéristiques spatiale, temporelle et de format voulues pour personnaliser lesdites données vidéo, et
(d) des moyens pour transmettre à l'utilisateur à distance (2, 4, 6) des données vidéo personnalisées provenant desdites données vidéo contenues dans ledit fichier de données vidéo particulier après personnalisation par la source de données vidéo (8, 12) sur la base des paramètres reçus.

22. Source de données vidéo selon la revendication 21, dans laquelle les paramètres déterminent au moins deux des caractéristiques spatiale, temporelle et de format voulues.

23. Source de données vidéo selon la revendication 21 ou 22, dans laquelle les paramètres déterminent toutes les caractéristiques spatiale, temporelle et de format.

24. Source de données vidéo selon la revendication 21, 22 ou 23, dans laquelle lesdites données vidéo personnalisées sont transmises sur un réseau (10) ou sur l'Internet (10).

25. Source de données vidéo selon l'une quelconque des revendications 21 à 24, dans laquelle la source de données vidéo comporte un serveur de réseau (8, 12) ou un serveur Internet (8, 12).

26. Source de données vidéo selon l'une quelconque des revendications 21 à 25, dans laquelle l'utilisateur à distance est un terminal d'ordinateur (2, 4, 6).

27. Source de données vidéo selon l'une quelconque des revendications 21 à 26, dans laquelle la source de données vidéo transmet à l'utilisateur à distance un programme de commande afin de permettre à l'utilisateur à distance de spécifier des paramètres déterminant les caractéristiques spatiale, temporelle et de format voulues des données vidéo personnalisées.

28. Source de données vidéo selon la revendication 27, dans laquelle le programme de commande est écrit en Java.

29. Source de données vidéo selon l'une quelconque des revendications 21 à 28, dans laquelle la source de données vidéo est sensible aux paramètres destinés à déterminer la caractéristique auditive et/ou visuelle des données vidéo personnalisées.

30. Source de données vidéo selon l'une quelconque des revendications 21 à 29, dans laquelle la source de données vidéo est utilisable par plusieurs utilisateurs à distance simultanément.

31. Source de données vidéo selon l'une quelconque des revendications 21 à 30, dans laquelle la source de données vidéo est sensible aux paramètres destinés à déterminer une ou plusieurs caractéristiques vidéo suivantes : la mesure temporelle des données vidéo originales à inclure dans les données vidéo personnalisées, la mesure spatiale des données vidéo originales à inclure dans les données vidéo personnalisées, la mesure selon laquelle les données vidéo originales doivent être grossies ou réduites, le rapport chronocinématographique entre les données vidéo originales et les données vidéo personnalisées, les bandes son accompagnant les données vidéo personnalisées, l'aspect visuel des données vidéo personnalisées tel que déterminé par l'application de processus de traitement d'images sélectionnés, et la nature du codage des données vidéo personnalisées, c'est-à-dire le format vidéo, la fréquence image vidéo, l'algorithme de compression/décompression (codec) et le réglage de la qualité de compression appliqué aux données vidéo personnalisées avant le téléchargement vers l'utilisateur à distance.
